# EUROPEAN PATENT APPLICATION

(11) **EP 3 343 887 A1**
(43) Date of publication of application: **04.07.2018**
(21) Application number: 16866628.7
(22) Date of filing: 15.11.2016
(51) Int. Cl.: H04M 1/725, G06Q 50/10

(54) **ELECTRONIC DEVICE AND CONTENT OUTPUT METHOD OF ELECTRONIC DEVICE**

(30) Priority: 20.11.2015 KR 20150163240
(71) Applicant: Samsung Electronics Co., Ltd., Suwon-si, Gyeonggi-do 16677 (KR)
(72) Inventor: KIM, Han Jib, Suwon-si, Gyeonggi-do 16698 (KR); YEOM, Dong Hyun, Bucheon-si, Gyeonggi-do 14574 (KR); LEE, Chang Ho, Suwon-si, Gyeonggi-do 16532 (KR); JEON, Yong Joon, Hwaseong-si, Gyeonggi-do 18446 (KR)
(74) Representative: Nederlandsch Octrooibureau
(86) International application number: PCT/KR2016/013135
(87) International publication number: WO 2017/086676

(57) **Abstract**

An electronic device according to various embodiments of the present disclosure may comprise a processor set to: request a web page including a plurality of types of content through a communication module, a display, a speaker, and a communication module to a web server; receive content including the web page from the web server; analyze the type of content included in the web page; determine at least one usable content output mode from among an image mode, a video mode, and a sound mode, on the basis of the type of content; and when one from among the at least one usable content output mode is selected, outputting a portion of the types of content from among the received content according to the selected content output mode. Other embodiments are also possible.

## Description

### [TECHNICAL FIELD]

The present disclosure relates to a method of outputting content included in a web page.

### [BACKGROUND ART]

With the development of electronic technologies, various types of electronic products are being developed and distributed. In particular, an electronic device, such as a smartphone, a tablet PC, or the like, which has a variety of functions, is being widely supplied nowadays.

As the functions of the electronic device are diversified, various services, such as an email, web surfing, photo shooting, a game, a message, social network service (SNS), music, or the like may be provided through an application in one electronic device.

### [DETAILED DESCRIPTION OF THE INVENTION]

### [TECHINICAL PROBLEM]

When web surfing is performed by using a web browser, various types of content may be included in a web page. The web browser may arrange the content in a layout provided on the web page and may provide the content for a user. When the web page includes various types of content, the limitation in size of a display or a layout on the web page may be inconvenient for a user.

Various embodiments of the present disclosure may provide electronic devices and methods of outputting electronic devices, capable of outputting content, which is included in a web page, in various modes such that a user conveniently view the web page.

### [TECHNICAL SOLUTION]

According to various embodiments of the present disclosure, an electronic device may include a communication module, a display, a speaker, and a processor configured to: request a web page from a web server including a plurality of types of content through the communication module, receive the content included in the web page from the web server, analyze a type of the content included in the web page, determine at least one content output mode available among an image mode, a video mode, and a sound mode, based on the type of the content, and output, when one is selected from the at least one content output mode which is available, some types of content in the received content depending on the selected content output mode .

According to various embodiments of the present disclosure, a method of outputting content of an electronic device may include requesting a web server to provide a web page including a plurality of types of content , receiving the content included in the web page from the web server, analyzing a type of the content included in the web page, determining at least one content output mode available among an image mode, a video mode, and a sound mode, based on the type of the content, selecting one of the at least one content output mode which is available, and outputting some types of content of the received content depending on the selected content output mode.

### [ADVANTAGEOUS EFFECTS OF THE INVENTION]

According to various embodiments of the present disclosure, various content output modes are recommended to the user depending on the types of content included in the web page and the content is output depending on the content output mode, thereby enhancing the convenience of the user.

### [DESCRIPTION OF THE DRAWINGS]

FIG. 1 is a block diagram illustrating elements of an electronic device, according to various embodiments of the present disclosure;
FIG. 2 is a view illustrating a user interface, according to various embodiments of the present disclosure;
FIG. 3 is a view illustrating a user interface, according to various embodiments of the present disclosure;
FIG. 4 is a view illustrating a text mode, according to various embodiments of the present disclosure;
FIG. 5 is a view illustrating an image mode, according to various embodiments of the present disclosure;
FIG. 6 is a view illustrating an image mode, according to various embodiments of the present disclosure;
FIG. 7 is a view illustrating an image mode, according to various embodiments of the present disclosure;
FIG. 8 is a view illustrating a video mode, according to various embodiments of the present disclosure;
FIG. 9 is a view illustrating a video mode, according to various embodiments of the present disclosure;
FIG. 10 is a flowchart illustrating a method of outputting content of an electronic device, according to various embodiments of the present disclosure;
FIG. 11 is a flowchart illustrating a method of outputting content of an electronic device, according to various embodiments of the present disclosure;
FIG. 12 is a flowchart illustrating a method of outputting content of an electronic device, according to various embodiments of the present disclosure;
FIG. 13 is a block diagram of illustrating electronic device in a network environment, according to various embodiments of the present disclosure;
FIG. 14 is a block diagram illustrating an electronic device, according to various embodiments; and
FIG. 15 is a block diagram of a program module, according to various embodiments.

### [BEST MODE]

Hereinafter, various embodiments of the present disclosure may be described with reference to accompanying drawings. Accordingly, those of ordinary skill in the art will recognize that modifications, equivalents, and/or alternatives on the various embodiments described herein can be variously made without departing from the scope and spirit of the present disclosure. With regard to description of drawings, similar elements may be marked by similar reference numerals.

In this disclosure, the expressions "have", "may have", "include" and "comprise", or "may include" and "may comprise" used herein indicate existence of corresponding features (e.g., elements such as numeric values, functions, operations, or components) but do not exclude presence of additional features.

In this disclosure, the expressions "A or B", "at least one of A or/and B", or "one or more of A or/and B", and the like may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The terms, such as "first", "second", and the like used in this disclosure may be used to refer to various elements regardless of the order and/or the priority and to distinguish the relevant elements from other elements, but do not limit the elements. For example, "a first user device" and "a second user device" indicate different user devices regardless of the order or priority. For example, without departing the scope of the present disclosure, a first element may be referred to as a second element, and similarly, a second element may be referred to as a first element.

It will be understood that when an element (e.g., a first element) is referred to as being "(operatively or communicatively) coupled with/to" or "connected to" another element (e.g., a second element), it may be directly coupled with/to or connected to the other element or an intervening element (e.g., a third element) may be present. In contrast, when an element (e.g., a first element) is referred to as being "directly coupled with/to" or "directly connected to" another element (e.g., a second element), it should be understood that there are no intervening element (e.g., a third element).

According to the situation, the expression "configured to" used in this disclosure may be used as, for example, the expression "suitable for", "having the capacity to", "designed to", "adapted to", "made to", or "capable of'. The term "configured to" must not mean only "specifically designed to" in hardware. Instead, the expression "a device configured to" may mean that the device is "capable of' operating together with another device or other components. For example, a "processor configured to (or set to) perform A, B, and C" may mean a dedicated processor (e.g., an embedded processor) for performing a corresponding operation or a generic-purpose processor (e.g., a central processing unit (CPU) or an application processor) which performs corresponding operations by executing one or more software programs which are stored in a memory device.

Terms used in this disclosure are used to describe specified embodiments and are not intended to limit the scope of the present disclosure. The terms of a singular form may include plural forms unless otherwise specified. All the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal unless expressly so defined in various embodiments of this disclosure. In some cases, even if terms are terms which are defined in this disclosure, they may not be interpreted to exclude embodiments of this disclosure.

An electronic device according to various embodiments of this disclosure may include at least one of, for example, smartphones, tablet personal computers (PCs), mobile phones, video telephones, electronic book readers, desktop PCs, laptop PCs, netbook computers, workstations, servers, personal digital assistants (PDAs), portable multimedia players (PMPs), Motion Picture Experts Group (MPEG-1 or MPEG-2) Audio Layer 3 (MP3) players, mobile medical devices, cameras, or wearable devices. According to various embodiments, the wearable device may include at least one of an accessory type (e.g., watches, rings, bracelets, anklets, necklaces, glasses, contact lens, or head-mounted-devices (HMDs), a fabric or garment-integrated type (e.g., an electronic apparel), a body-attached type (e.g., a skin pad or tattoos), or a bio-implantable type (e.g., an implantable circuit).

According to various embodiments, the electronic device may be a home appliance. The home appliances may include at least one of, for example, televisions (TVs), digital versatile disk (DVD) players, audios, refrigerators, air conditioners, cleaners, ovens, microwave ovens, washing machines, air cleaners, set-top boxes, home automation control panels, security control panels, TV boxes (e.g., Samsung HomeSync™, Apple TV™, or Google TV™), game consoles (e.g., Xbox™ or PlayStation™), electronic dictionaries, electronic keys, camcorders, electronic picture frames, and the like.

According to another embodiment, an electronic device may include at least one of various medical devices (e.g., various portable medical measurement devices (e.g., a blood glucose monitoring device, a heartbeat measuring device, a blood pressure measuring device, a body temperature measuring device, and the like), a magnetic resonance angiography (MRA), a magnetic resonance imaging (MRI), a computed tomography (CT), scanners, and ultrasonic devices), navigation devices, Global Navigation Satellite System (GNSS), event data recorders (EDRs), flight data recorders (FDRs), vehicle infotainment devices, electronic equipment for vessels (e.g., navigation systems and gyrocompasses), avionics, security devices, head units for vehicles, industrial or home robots, automatic teller's machines (ATMs), points of sales (POSs) of stores, or internet of things (e.g., light bulbs, various sensors, electric or gas meters, sprinkler devices, fire alarms, thermostats, street lamps, toasters, exercise equipment, hot water tanks, heaters, boilers, and the like).

According to an embodiment, the electronic device may include at least one of parts of furniture or buildings/structures, electronic boards, electronic signature receiving devices, projectors, or various measuring instruments (e.g., water meters, electricity meters, gas meters, or wave meters, and the like). According to various embodiments, the electronic device may be one of the above-described devices or a combination thereof. An electronic device according to an embodiment may be a flexible electronic device. Furthermore, an electronic device according to an embodiment of this disclosure may not be limited to the above-described electronic devices and may include other electronic devices and new electronic devices according to the development of technologies.

Hereinafter, electronic devices according to various embodiments will be described with reference to the accompanying drawings. In this disclosure, the term "user" may refer to a person who uses an electronic device or may refer to a device (e.g., an artificial intelligence electronic device) that uses the electronic device.

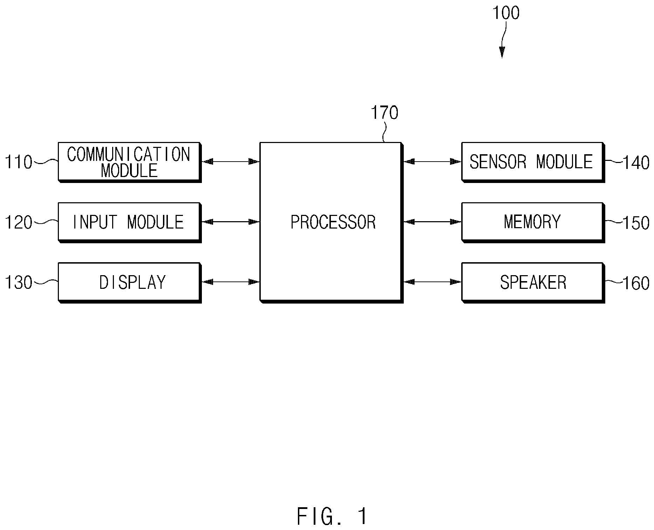

FIG. 1 is a block diagram illustrating elements of an electronic device according to various embodiments of the present disclosure.

Referring to FIG. 1, an electronic device 100 may include a communication module 110, an input module 120, a display 130, a sensor module 140, a memory 150, or a speaker 160. According to various embodiments of the present disclosure, the electronic device 100 may select a content output mode appropriate to the type of content included in a web page when providing the web page for a user through a web browser. The content output mode may be selected, for example, depending on a user input or may be automatically selected as a mode, which is appropriate to the electronic device 100 or the situation of the user, without the user input.

According to an embodiment, the communication module 110 (or a communication circuit) may communicate with an external device. According to an embodiment, the communication module 110 may request the web server to provide a web page (or hypertext markup language (html) data) and may receive content included in the web page from the web server. The web page may include, for example, a portal site, a company or personal homepage or a web page for downloading content. The content may include, for example, at least one of text content, image content, video content, and sound content.

According to an embodiment, the communication module 110 may include an RF module, a cellular module, a wireless-fidelity (Wi-Fi) module, a Bluetooth module, a global navigation satellite system (GNSS) module, or a near field communication (NFC) module. The electronic device 100 may be connected with, for example, a network (e.g., the Internet or a mobile communication network) to communicate with the external device (e.g., a web server or satellite) through at least one of the above-described modules.

According to an embodiment, the input module 120 (or the user input device) may receive (or sense) a user input. According to an embodiment, the input module 120 may include a touch sensor panel, which senses the touch operation of the user, or a pen sensor panel (e.g., a digitizer) which senses the pen operation of the user. According to an embodiment, the input module 120 may include a motion recognition sensor, which recognizes the motion of the user, or a voice recognition sensor which recognizes the voice of the user.

According to an embodiment, the input module 120 may receive a user input for selecting the content output mode. According to an embodiment, the input module 120 may receive a user input for changing the content output mode.

According to an embodiment, the display 130 may display a user interface. According to an embodiment, the display 130 may display a user interface for selecting or changing the content output mode. The content output mode may include, for example, a text mode, an image mode, a video mode, or a sound mode. The user interface may include, for example, an object corresponding to a content output mode, which is available, or an object representing a current content output mode of the electronic device 100. For example, the user may select or change the content output mode by using the user interface.

According to an embodiment, the display 130 may display the content received from a web server. For example, the display 130 may display content, which is received from the web server, in a layout provided on the web page. For another example, the display 130 may display the content, which is received from the web server, in a layout different from the layout provided on the web page when the content output mode is selected.

According to an embodiment, the input module 120 and the display 130 may be implemented as a touch screen in which an input panel is disposed on a display panel to simultaneously perform displaying and sensing of a touch which is manipulated.

According to an embodiment, the sensor module 140 may sense the state or the surrounding environment of the electronic device. According to an embodiment, the sensor module 140 may include an acceleration sensor, a gyro sensor, or an illuminance sensor. The acceleration sensor or the gyro sensor may sense, for example, the movement of the electronic device 100. The illuminance sensor may sense the surrounding illuminance of the electronic device 100.

According to an embodiment, the memory 150 (e.g., a non-volatile memory) may store the schedule of the user. For example, the memory 150 may store the schedule (e.g., a conference) of the user registered in a schedule management application. According to an embodiment, the memory 150 may store a web page visit history. According to an embodiment, the memory 150 may store a content output mode set for a specific web page together with the web page visit history.

According to an embodiment, the speaker 160 may convert audio data into a sound to be output. For example, the speaker 160 may output sound content included in the web page.

According to an embodiment, a processor 170 may control the overall operation of the electronic device 100. According to an embodiment, the processor 170 may include at least one processor. According to an embodiment, the processor 170 may individually control the communication module 110, the input module 120, the display 130, the sensor module 140, the memory 150, or the speaker 160 and may output content according to various embodiments of the present disclosure. According to an embodiment, the processor 170 (e.g., an application processor) may be implemented with a system on chip (SoC) including a central processing unit (CPU), a graphic processing unit (GPU), or a memory, or the like.

According to an embodiment, the processor 170 may request a web page from a web server through the communication module 110. According to an embodiment, the processor 170 may request the web server to provide the web page depending on a user input. For example, a user may input a URL indicating the address of the web page, select a link (e.g., a hyper-link) included in a specific web page, request for a specific web page through a web page visit history or favorites, or request for a search through a search engine.

According to an embodiment, the processor 170 may receive content, which is included in a web page, from a web server through the communication module 110. According to an embodiment, the processor 170 may request the web server to provide a web page including a plurality of types of content and may receive the plurality of types of content from the web server.

According to an embodiment, when (while) the content is received from the web server, the processor 170 may output the received content in a layout (or the first layout) provided on the web page. The processor 170 may receive, for example, the layout of the web page when receiving the web page.

According to an embodiment, the processor 170 may analyze the type of the content which is received (is to be received) from the web server. For example, the processor 170 may analyze the content by using the received content or parsed data (e.g., dom, tree, render tree, layer, or the like). For another example, when information (e.g., the type, the size, or the position of the content, or a content count) on the content, which is included in the web page, is received, the processor 170 may analyze the type of the content by using the received information. According to an embodiment, the processor 170 may classify the content, which is received from the web server, as one of text content, image content, video content, and sound content.

According to an embodiment, the processor 170 may determine a content output mode, which is available, based on the type of the content. The content output mode may include, for example, a text mode, an image mode, a video mode, or a sound mode. For example, the processor 170 may determine that the image mode is available when at least one image content is included in main content of the web page. For another example, the processor 170 may determine that the image mode is available, when an image having a specified size (e.g., 30% of the size of the display) or more or the specified number (e.g., two) of images or more is included in the web page. For example, the processor 170 may determine that the video mode is available when at least one video content is included in the web page. For example, the processor 170 may determine that the sound mode is available when at least one piece of content (e.g., sound content or video content) for audio output is included in the web page.

According to an embodiment, the processor 170 may select one of content output modes which are available. According to an embodiment, the processor 170 may select the content output mode depending on a user input. According to an embodiment, the processor 170 may display, on the display 130, at least one object corresponding to at least one content output mode, which is available, and may select the content output mode depending on a user input received through the object. For example, the processor 170 may display, on the display 130, an icon corresponding to the available content output mode and a pop-up window for notifying that the change of the content output mode is possible.

According to an embodiment, the processor 170 may recommend at least one of content output modes which are available and may display an object corresponding to the recommended content output mode on the display 130.

According to an embodiment, the processor 170 may recommend at least one content output mode, which is available, based on at least one of content, a position of an electronic device, a surrounding environment of the electronic device, a category of a web page, a search manner, a mode selection history of a user, or a schedule of the user. For example, the processor 170 may recommend the image mode when image content is included at a specified ratio (e.g., 50% of a main content region) in the web page. For another example, the processor 170 may recommend the video mode by determining that video content has higher importance when text content and video content are present in the web page. For another example, the processor 170 may recommend the image mode or the text mode other than the video mode and the sound mode when the electronic device 100 is positioned at a specified place (e.g., a meeting room or a library). For another example, the processor 170 may recommend the image mode when a user performs a search with an image and may recommend the sound mode when the user performs a search with music. For another example, the processor 170 may recommend the video mode when a user selects a moving picture category of categories (e.g., news, blogs, images, or moving pictures) for a search result or may recommend the image mode when the user selects an image category of the categories for the search result. For another example, when the user currently has a schedule such as a wedding or a meeting, the processor 170 may recommend the image mode or the text mode other than the moving picture mode or the sound mode. For another example, in the case that the user frequently uses the image mode with respect to a specific web site (or a specific web page), the processor 170 may recommend the image mode when the specific web site is displayed. For another example, when the user frequently uses a specific mode (e.g., the moving picture mode) on a web site associated with a specific category (e.g., sports) and when the web page associated with the category is displayed, the user may recommend the video mode.

According to an embodiment, the processor 170 may select a content output mode, based on at least one of content, a position of an electronic device, a surrounding environment of the electronic device, a category of the web page, a search manner, a mode selection history of a user, or a schedule of the user. For example, the processor 170 may select a content output mode appropriate to the electronic device 100 or the situation of the user without the user input. The processor 170 may select, for example, a content output mode in a manner similar to the above-described manner of recommending the mode.

According to an embodiment, the processor 170 may output content, which is received from a web server, in the selected content output mode. According to an embodiment, when a content output mode is selected, the processor 170 may output content in a layout different from a layout provided on a web page. According to an embodiment, when a content output mode is selected by a user input in the state that the content is being output in the layout provided on the web page, the processor 170 may output content received from the web server in the selected content output mode. For example, the processor 170 may output the content in a text mode, an image mode, a video mode, or a sound mode. According to an embodiment, the processor 170 may output some types of content, which corresponds to the selected content output mode, of a plurality of types of content included in the web page. The text mode may be, for example, a mode of outputting only text content or outputting content while focusing on the text content. The image mode may be, for example, a mode of outputting only image content or outputting content while focusing on the image content. The video mode may be, for example, a mode of outputting only video content or outputting content while focusing on the video content. The sound mode may be, for example, a mode of outputting only sound content or outputting content while focusing on the sound content.

According to an embodiment, when a content output mode is selected without a user input (or automatically), the processor 170 may skip an operation of displaying content in a layout provided on a web page. According to an embodiment, when the content output mode is selected without the user input (or automatically), the processor 170 may skip the operation of displaying the content in the layout provided on the web page and may output received content in a layout corresponding to the selected content output mode.

According to an embodiment, the processor 170 may display an object corresponding to the selected content output mode on the display 130. According to an embodiment, the processor 170 may change the content output mode depending on a user input received through the object.

According to an embodiment, the processor 170 may change the content output mode based on at least one of the position, the state, the surrounding environment of an electronic device and a user schedule. For example, when the position of the electronic device is changed, the processor 170 may change a content output mode from an image mode to a video mode or from the image mode to a normal mode (e.g., a mode of outputting content in a layout provided on a web page), based on the position of the electronic device.

According to an embodiment, when the content output mode is changed, the processor 170 may output content in the changed content output mode. For example, the processor 170 may output a sound by changing from a video mode to a sound mode, when the display 130 is turned off or the user overturns the electronic device 100 and thus does not view the display 130 in the video mode. For another example, the processor 170 may output text content by voice by changing from the text mode to the sound mode, when the display 130 is turned off or the user overturns the electronic device 100 and thus does not view the display 130 in the text mode. For another example, when determining, in the video mode, a current state as a state that the output of a sound is inappropriate (for example, the state that a user attends a meeting or enters a library), the processor 170 may display an image frame included in video content by changing from the video mode to the image mode and may express the voice included in the video content by converting the voice into a text.

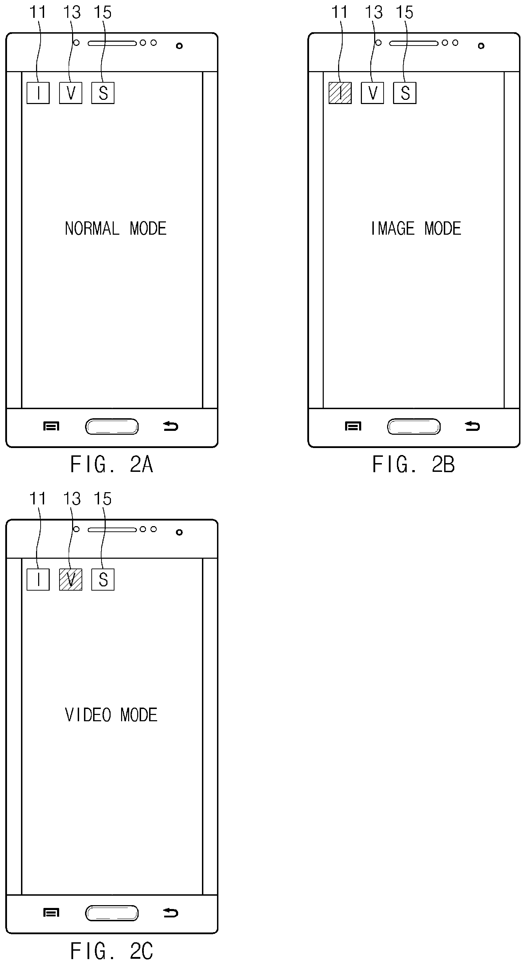

FIG. 2 is a view illustrating a user interface, according to various embodiments of the present disclosure.

According to an embodiment, the processor 170 may display, on the display 130, an object corresponding to a content output mode, which is available, and may select or change a content output mode depending on a user input received through the object.

Referring to FIG. 2A, the processor 170 may output content on the display 130 in a layout (or the first layout) provided on a web page (or in a normal mode) when the content is received from a web server. According to an embodiment, the processor 170 may determine a content output mode available to the web page and may display, on the display 130, at least one object 11, 13, or 15 corresponding to the available content output mode. For example, when an image mode, a video mode, and a sound mode are available to the web page, the processor 170 may display, on the display 130, the object 11 corresponding to the image mode, the object 13 corresponding to the video mode, and the object 15 corresponding to the sound mode. When the object 11 corresponding to the image mode is selected by a user in the state that content is displayed in the layout provided on the web page, a user interface illustrated in FIG. 2B may be displayed on the display 130.

Referring to FIG. 2B, when the object 11 corresponding to the image mode is selected by a user, the processor 170 may output the received content in the image mode. According to an embodiment, the processor 170 may display the object 11 corresponding to the image mode with a color, brightness, or transparency different from those of different objects 13 and 15. When the object 13 corresponding to the video mode is selected by the user in the state that content is output in the image mode, a user interface illustrated in FIG. 2C may be displayed on the display 130.

Referring to FIG. 2C, when the object 13 corresponding to the video mode is selected by the user, the processor 170 may output the received content in the video mode. According to an embodiment, the processor 170 may display the object 13 corresponding to the video mode with a color, brightness, or transparency different from those of different objects 11 and 15.

According to an embodiment, the processor 170 may allow at least one object 11, 13, or 15 to disappear from the display 130 when a specified time elapses after the at least one object 11, 13, or 15 is displayed on the display 130. For example, when the content output mode is changed, the processor 170 may allow at least one object 11, 13, or 15 to disappear from the display 130 when the specified time (e.g., five seconds) elapses after the at least one object 11, 13, or 15 is displayed on the display 130.

According to an embodiment, the processor 170 may display the at least one object 11, 13, or 15 on a region (e.g., an address window) on which an address (e.g., a uniform resource locator (URL)) of a web page is displayed (e.g., may display the at least one object 11, 13, or 15 in overlap with the address window).

According to an embodiment described with reference to FIG. 2, a user may intuitively recognize a content output mode available to a web page and a content output mode currently selected and may conveniently select or change the content output mode by using an object corresponding to the content output mode.

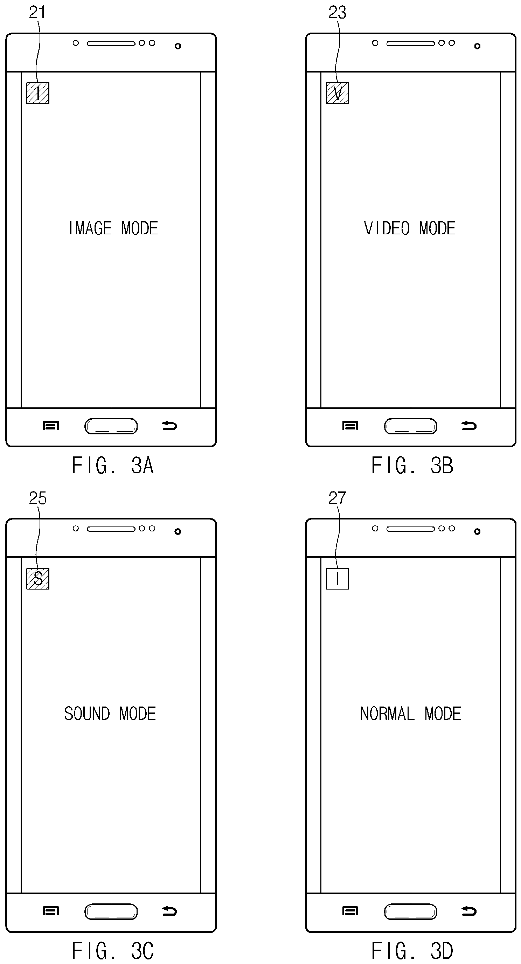

FIG. 3 is a view illustrating a user interface, according to various embodiments of the present disclosure.

According to an embodiment, the processor 170 may display, on the display 130, an object corresponding to a content output mode, which is currently selected, and may select or change the content output mode depending on a user input received through the object. For example, although all objects corresponding to selectable content output modes are displayed in FIG. 2, only one of the objects corresponding to the selectable content output modes is displayed in FIG. 3 and the displayed object and the content output mode may be changed depending on a user input of selecting the object.

Referring to FIG. 3A, when content is received from a web server, the processor 170 may select a content output mode, based on at least one of the content, a position of an electronic device, a surrounding environment of the electronic device, a category of a web page, a search manner, a mode selection history of a user, or a schedule of the user. For example, the processor 170 may select an image mode and may output the content on the display 130 depending on the image mode. According to an embodiment, the processor 170 may display an object 21 corresponding to the currently selected image mode on the display 130. According to an embodiment, when the object 21 corresponding to the image mode is selected by a user, a user interface illustrated in FIG. 3B may be displayed on the display 130.

Referring to FIG. 3B, when the object 21 corresponding to the image mode is selected by the user, the processor 170 may output the received content in a different content output mode (e.g., a video mode). According to an embodiment, the processor 170 may change the object 21 corresponding to the image mode to an object 23 corresponding to the video mode and may display the object 23 corresponding to the video mode. According to an embodiment, when the object 23 corresponding to the video mode is selected by a user, a user interface illustrated in FIG. 3C may be displayed on the display 130.

Referring to FIG. 3C, when the object 23 corresponding to the video mode is selected by the user, the processor 170 may output the received content in a different content output mode (e.g., a sound mode). According to an embodiment, the processor 170 may change the object 23 corresponding to the video mode to an object 25 corresponding to the sound mode and may display the object 25 corresponding to the sound mode. According to an embodiment, when the object 23 corresponding to the sound mode is selected by the user, the user interface illustrated in FIG. 3D may be displayed on the display 130.

Referring to FIG. 3D, the processor 170 may output received content onto the display 130 in a layout (or the first layout) provided on a web page (or in a normal mode) when the object 25 corresponding to the sound mode is selected by the user. According to an embodiment, the processor 170 may change the object 25 corresponding to the sound mode to an object 27 corresponding to the normal mode and may display the object 27 corresponding to the normal mode. According to an embodiment, the processor 170 may display the object 27 corresponding to the normal mode with a color, brightness, or transparency different from those of the different objects 21, 23, and 25. According to an embodiment, when the object 27 corresponding to the normal mode is selected by the user, the user interface illustrated in FIG. 3A may be displayed on the display 130 again.

According to an embodiment described with reference to FIG. 3, the user may intuitively recognize the content output mode currently selected and may conveniently change the content output mode by using the object corresponding to the currently selected content output mode.

According to an embodiment described with reference to FIG. 3, although the description has been made regarding that the processor 170 displays the object corresponding to the currently selected content output mode on the display 130, the processor 170 may display the object corresponding to the content output mode to be changed when the object displayed on the display 130 is selected. For example, as illustrated in FIG. 3A, when the currently content output mode is the image mode, the processor 170 may display the object corresponding to the video mode on the display 130. For example, when a user input of selecting the object corresponding to the video mode is received, the processor 170 may change the content output mode to the video mode and may display the object corresponding to the sound mode on the display 130.

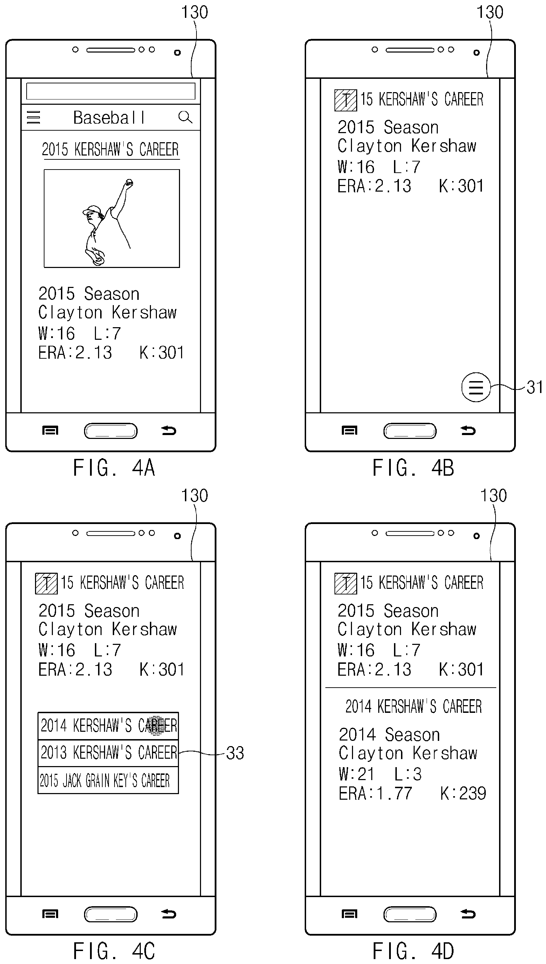

FIG. 4 is a view illustrating a text mode, according to various embodiments of the present disclosure.

FIG. 4A illustrates a web page displayed on the display 130. Referring to FIG. 4A, content included in the web page may be arranged in a layout provided on the web page.

According to an embodiment, the processor 170 may display, on the display 130, only text content of the content included in the web page when the text mode is selected. For example, referring to FIG. 4B, only the text content of the content, which has been displayed on the display 130, may be displayed. According to an embodiment, the processor 170 may display an object 31 for searching for a web page visited in the past on the display 130 in the text mode. For example, the user may input a user command by using the object 31.

According to an embodiment, the processor 170 may search for a web page associated with a currently displayed web page of the web pages visited by the user in the past when a specified user input is received in the text mode. For example, the processor 170 may search for the web page associated with the currently displayed web page by using at least some words (e.g., Kershaw or career) included in the title of the currently displayed web page. According to an embodiment, the processor 170 may provide the searched web page in the form of a list on at least a portion of the display 130. For example, referring to FIG. 4C, a list 33 including the searched web page may be displayed on the display 130. The user may select at least one web page by using the list 33.

According to an embodiment, when a specific web page is selected from the list by the user, the processor 170 requests a web server to provide the selected web page and may insert text content included in the web page into text content which is currently displayed. For example, referring to FIG. 4D, new text content may be added under the text content which is previously displayed. Accordingly, the user may continuously read the web page associated with the current web page. According to an embodiment, the processor 170 may store the merged text content in the form of one file depending on a user input.

According to an embodiment, the processor 170 may translate, into a specified language, at least a portion of text content included in a web page in the text mode and may provide the translated text. For example, when text content is provided in a language different from the specified language, the processor 170 may translate the text content into the specified language and may provide the translated content. For another example, when the translation for the at least a portion of the text content is requested from the user, the processor 170 may translate the text content requested to be translated into the specified language and may display the translated result.

According to an embodiment, when a specific word is searched by a user in a text mode, the processor 170 may display only a portion associated with the searched word and may hide a remaining portion. For example, when the specific word is searched by the user, the processor 170 may display a sentence or a paragraph including the searched word and may hide the remaining portion.

According to an embodiment, when the image mode is selected, the processor 170 may display image content included in a web page by changing the size of the image content based on the information (e.g., the size or the resolution) on the image content and the information (e.g., the size, the resolution, or a display mode (e.g., a horizontal mode)) on the display 130. For example, the processor 170 may display the image content in the maximum size based on the size of the display 130. For another example, the processor 170 may allow a plurality of images to be displayed on one display screen by reducing the size of multiple pieces of image content. According to an embodiment, when the image mode is selected, the processor 170 may provide the multiple pieces of image content, which is included in the web page, in the form of a slide. For example, the processor 170 may sequentially display the multiple pieces of image content at specified time intervals or may sequentially display the multiple pieces of image content depending on the user input.

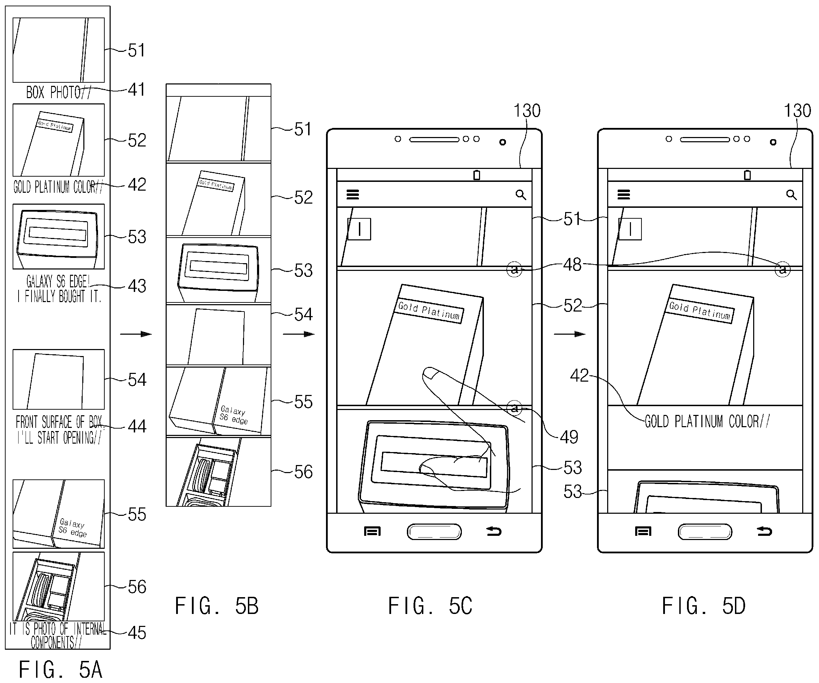

FIG. 5 is a view illustrating an image mode, according to various embodiments of the present disclosure.

According to an embodiment, when the image mode is selected, the processor 170 may display only image content of content included in a web page in a layout different from a layout provided on the web page . According to an embodiment, when multiple pieces of image content included in the web page are different from each other in size, the processor 170 may change the multiple pieces of image content to be equal to or approximate to each other in a length or a width and may display the changed result.

FIG. 5A illustrates content included in a web page. For example, the web page may include multiple pieces of text content 41, 42, 43, 44, and 45 and multiple pieces of image content 51, 52, 53, 54, 55, and 56. The multiple pieces of content included in the web page may be arranged at specified positions in specified order in a first layout provided on the web page.

FIG. 5B illustrates content arranged in a second layout in an image mode. According to an embodiment, the processor 170 may re-arrange only image content 51, 52, 53, 54, 55, and 56 of multiple pieces of content included in a web page in the second layout corresponding to the image mode when the image mode is selected.

Referring to FIG. 5C, the processor 170 may display some (e.g., the first to third image content 51, 52, and 53) of the multiple pieces of image content arranged in the second layout on the display 130. According to an embodiment, the processor 170 may move the image content displayed on the display 130 when a scroll input of the user is received. According to an embodiment, the processor 170 may display, on the display 130, an object (e.g., a symbol or an icon) representing that different content (e.g., text content) is interposed between multiple pieces of image content. For example, referring to FIG. 5C, the display 130 may display an object 48 representing that text content is interposed between the first image content 51 and the second image content 52 and an object 49 representing that text content is interposed between the second image content 52 and the third image content 53.

According to an embodiment, when a specified user operation is received in the state that image content is displayed on the display 130 in the image mode, the processor 170 may display text content corresponding to a position into which the user operation is input. For example, when the specified user operation (e.g., zoom-in) is received between the second image content 52 and the third image content 53, the processor 170 may display the second text content 42 on the display 130 as illustrated in FIG. 5D. As illustrated in FIG. 5D, when a specified user input (e.g., a zoom-out operation) is received in the state that the text content is displayed, the text content corresponding to the position into which the user operation is input may disappear as illustrated in FIG. 5C.

According to an embodiment, functions based on the above-described zoom-in operation or zoom-out operation may be applied to all text content included in the web page. For example, when the zoom-in operation is received in the image mode, the image content 51, 52, 53, 54, 55, 56 and the text content 41, 42, 43, 44, 45 are arranged in the first layout illustrated in FIG. 5A and displayed on the display 130. When the zoom-out operation is received, only the image content 51, 52, 53, 54, 55, and 56 may be displayed on the display 130 in the second layout illustrated in FIG. 5B.

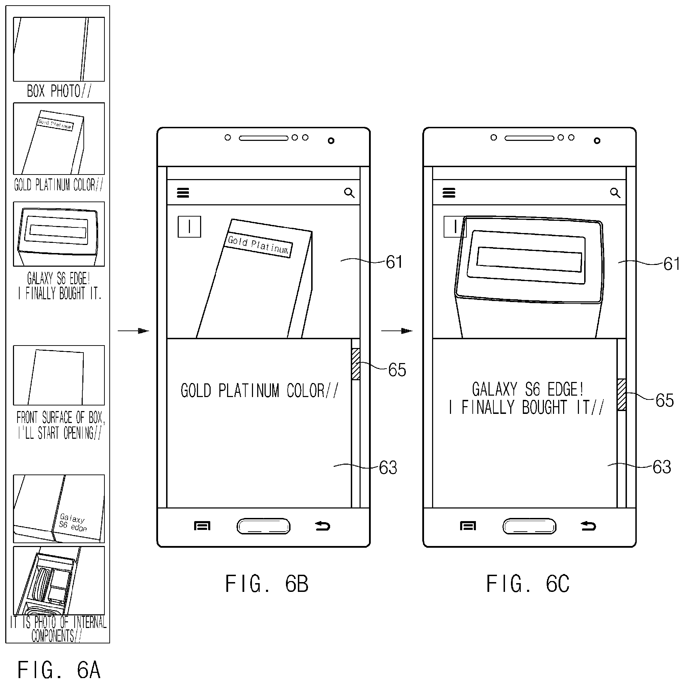

FIG. 6 is a view illustrating an image mode, according to various embodiments of the present disclosure.

According to an embodiment, when the image mode is selected, the processor 170 may separate image content and text content of the content included in the web page from each other and may display the image content and the text content on specified positions, respectively.

FIG. 6A illustrates content included in a web page. For example, the web page may include multiple pieces of text content and image content. The multiple pieces of content included in the web page may be arranged at specified positions in specified order in a first layout provided on the web page.

Referring to FIG. 6B, in the image mode, the processor 170 may display image content on a first region 61 of the display 130 and text content on a second region 63 of the display 130. According to an embodiment, the processor 170 may display a scroll bar 65 representing the sequence of the multiple pieces of text content currently displayed on the display 130. Although not illustrated in FIG. 6, a scroll bar may be displayed on a region 31 that image content is displayed to represent the sequence of the multiple pieces of image content currently displayed.

Referring to FIG. 6C, when a scroll input is received from a user, the text content or image content displayed on the display 130 may be changed. For example, when the user inputs the scroll operation into a region (or the second region 63) that the text content is displayed, the position of the text content may be changed or another piece of text content may be displayed. For another example, when the user inputs the scroll operation into a region (or the first region 61) that the image content is displayed, the image content may be changed to another image content to be displayed. According to an embodiment, when text content or image content is changed depending on a user operation, the processor 170 may change and display the image content or the text content to correspond to the changed content.

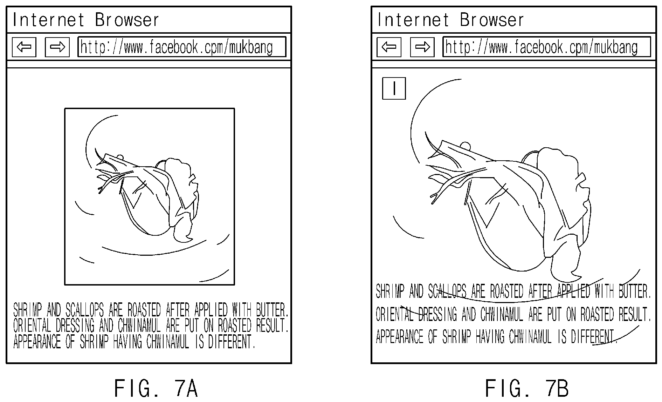

FIG. 7 is a view illustrating an image mode, according to various embodiments of the present disclosure.

According to an embodiment, when an image mode is selected, the processor 170 may change the size or the position of image content of content included in the web page and may display, the display 130, the image content such that the image content is overlapped with text content.

Referring to FIG. 7A, content (e.g., text content and image content) may be displayed on the display 130 in a layout provided on a web page.

Referring to FIG. 7B, when an image mode is selected, the processor 170 may display the image content by changing the size and the position of the image content based on the resolution or the size of the display 130 and may display the text content by overlapping the text content with at least a partial region of the image content. According to an embodiment, when a user operation (e.g., a scroll operation) is input, the processor 170 may change the position of the image content or the text content or may display another image content or text content. For example, when an up-down directional user input is received, the processor 170 may display text content by moving or changing the text content. For another example, when a left-right directional user input is received, the processor 170 may display image content by changing the image content. According to an embodiment, the processor 170 may delete text content and display only image content when a specified user operation (e.g., a tap or a double-tap) is input. According to an embodiment, the processor 170 may display the text content again when the specified user operation (e.g., a tap or a double-tap) is input in the state that only the image content is displayed.

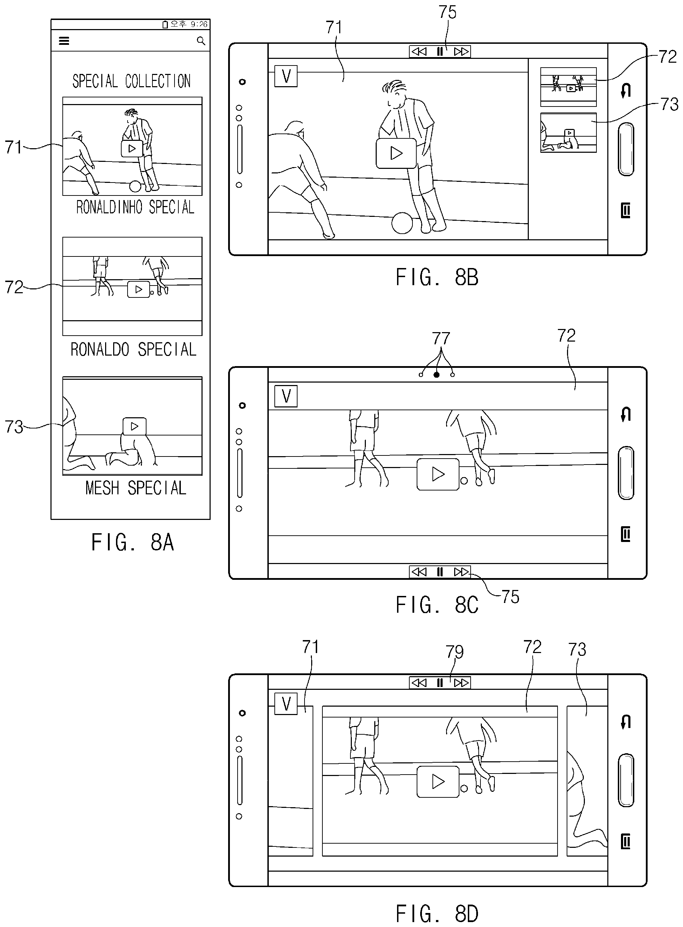

FIG. 8 is a view illustrating a video mode, according to various embodiments of the present disclosure.

According to an embodiment, the processor 170 may display, on the display 130, only video content of content included in a web page when the video mode is selected. According to an embodiment, when one piece of video content is included in the web page, the processor 170 may display the video content on the display 130 appropriately to the maximum size of the display 130 and may reproduce the video content without a user input. According to an embodiment, when multiple pieces of video content are included in the web page, the processor 170 may display the multiple pieces of video content in the form of a list.

FIG. 8A illustrates content included in a web page. For example, the web page may include multiple pieces of text content and multiple pieces of video content. Referring to FIG. 8A, the web page may include multiple pieces of video content 71, 72, and 73. The multiple pieces of content included in the web page may be, for example, arranged at specified positions in specified order in a first layout provided on the web page.

FIGS. 8B to 8D illustrate video modes, according to various embodiments of the present disclosure. Referring to FIG. 8B, the processor 170 may differently display the multiple pieces of video content 71, 72, and 73 included in the web page. For example, the processor 170 may display video content (e.g., the first video content 71), which is currently selected, in larger size and may display another video content (e.g., the second video content 72 and the third video content 73) in smaller size or in the form of a list. According to an embodiment, when video content is selected based on a user input, the processor 170 may display the video content by changing the size and the position of the video content.. According to an embodiment, the processor 170 may display, on the display, an object 75 for controlling the reproduction of video content. A user may control, for example, the reproduction of video content, which is currently selected, by using the object 75.

Referring to FIG. 8C, the processor 170 may display only the currently-selected video content (e.g., the second video content) among the multiple pieces of content 71, 72, and 73 included in the web page. According to an embodiment, the processor 170 may display, on the display 130, an indicator 77 for representing the currently-selected video content of the multiple pieces of video content included in the web page. For example, the processor 170 may display at least one indicator 77 corresponding to the number of the multiple pieces of video content included in the web page and may display the indicator corresponding to the currently-selected video content (e.g., the second video content 72) differently from another indicator.

Referring to FIG. 8D, the processor 170 may display the multiple pieces of video content 71, 72, and 73 by arranging the multiple pieces of video content 71, 72, and 73 in a specified direction (e.g., widthwise). According to an embodiment, the processor 170 may display the video content by changing the position of the video content depending on a user input. According to an embodiment, the processor 170 may display, on the display, an object 77 for controlling the reproduction of video content.

According to an embodiment, the processor 170 may identically or similarly change the quality (e.g., image quality) of the multiple pieces of video content when the multiple pieces of video content are included in the web page.

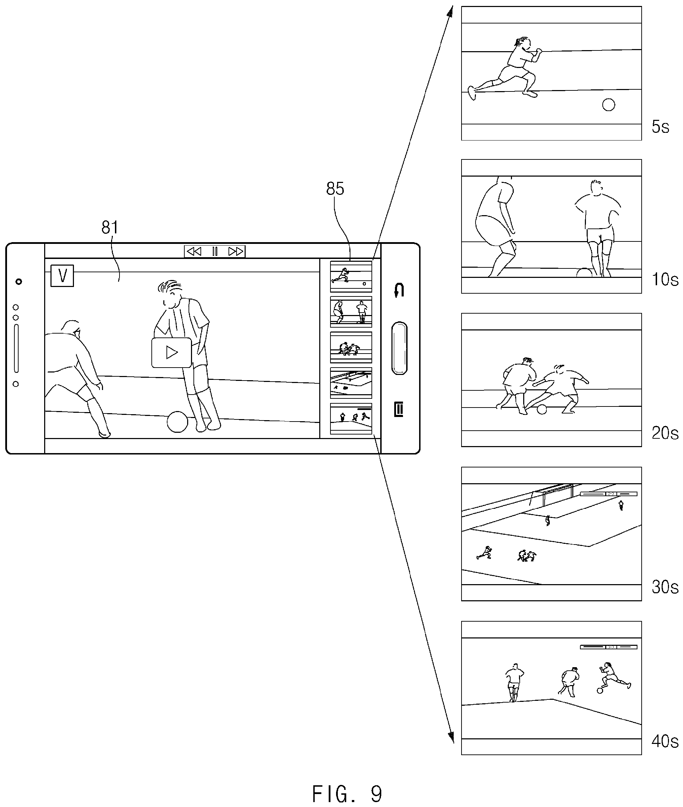

FIG. 9 is a view illustrating a video mode, according to various embodiments of the present disclosure.

According to an embodiment, when the video mode is selected, the processor 170 may display, on the display 130, some frames of video content included in a web page. For example, the processor 170 may request a web server to provide the some frames included in the video content or may display an image frame by using thumb nail information included in the video content.

According to an embodiment, the processor 170 may display an image frame on the display 130 corresponding to a specified time (e.g., a 10- second, 20-second, or 30-second time point). For example, referring to FIG. 9, the processor 170 may display, on a partial region of the display 130, image frames 85 corresponding to 5-second, 10-second, 20-second, 30- second, and 40-second time points of video content 81. According to an embodiment, the specified time may be changed based on the whole reproduction time of the video content. According to an embodiment, the processor 170 may display, on the display 130, an image frame to be displayed at a time point that an image is remarkably changed. According to an embodiment, the processor 170 may simultaneously display image frames in the form of thumb nail images or may sequentially display the image frames (e.g., image frames in the file format of 'gif') in time order. According to an embodiment, when an image frame is selected, the processor 170 may reproduce a moving picture from a time corresponding to the selected image frame.

According to an embodiment, when a sound mode is selected, the processor 170 may output sound content of content included in a web page through the speaker 160 or another sound output device. According to an embodiment, the processor 170 may provide a reproduction list by using a link of sound content included in the web page. For example, the sound content may include background music in the web page, sound content provided in the form of a link, sound content included in video content, or sound content obtained by converting text content to be in voice.

According to an embodiment, in the state that the processor 170 is in the sound mode, the processor 170 may continuously output sound content even when the display 130 is turned off or movement to another web page is made. For example, the processor 170 may continuously output sound content even if the web page is changed, by storing information on the sound content included in a web page in the sound mode. According to an embodiment, when new sound content is included in the changed web page, the processor 170 may reproduce the new sound content or may add the new sound content to the reproduction list.

According to an embodiment, when a link is included in the web page, the processor 170 may provide, in the form of a list, links of web pages, which include content corresponding to a content output mode, of web pages corresponding to link addresses. According to an embodiment, the processor 170 may request for information on the web page corresponding to the link address and may determine the type of content included in the web page by using the information on the web page. For example, when a search is requested by a user, various links may be included in a web page showing search results. In the state that the search results are displayed, when the user selects an image mode, links of web pages including image content may be provided in the form of a list. For another example, when the user selects a video mode, links of web pages including video content may be provided in the form of a list.

According to an embodiment, when a link is included in a web page, the processor 170 may receive and display content, which corresponds to a content output mode, of content included in a web page corresponding to a link address. For example, when an image mode is selected, the processor 170 may request the web page corresponding to the link address to provide image content to receive the image content and may display the image content together with image content included in a current web page. For another example, when a sound mode is selected, the processor 170 may provide, in the form of a reproduction list, sound content included in a web page corresponding to the link address together with sound content included in a current web page.

According to an embodiment, when transmitting a uniform resource identifier (URI) for a web page to an external electronic device or storing the web page (e.g., add to favorites), the processor 170 may transmit or store information on a content output mode set for the web page together. For example, the processor 170 may transmit information on the current content output mode to the external electronic device by using an anchor tag.

According to an embodiment, when sharing a web page with the external electronic device, the processor 170 may transmit a link address of content corresponding to the current content output mode. For example, when the sharing of the web page is requested by a user in a video mode, the processor 170 may transmit a link address of video content included in the web page to the external electronic device instead of the URI for the web page.

For example, the processor 170 may receive an URI (e.g., an URL) including content output information from the external electronic device. According to an embodiment, when the URI is selected by the user, the processor 170 may request a web server to provide a web page corresponding to the selected URI. According to an embodiment, when requesting for the web page, the processor 170 may request for only content corresponding to a content output mode included in the URI. For example, when information on a video mode is included in the URI, the processor 170 may request the web server to provide only video content in the web page and may receive the video content. According to an embodiment, when receiving content included in the web page, the processor 170 may output the content in a content output mode included in the URI.

According to various embodiments of the present disclosure, an electronic device may include a communication module, a display, a speaker, and a processor configured to request a web page from a web server including a plurality of types of content through the communication module, receive the content included in the web page from the web server, analyze a type of the content included in the web page, determine at least one content output mode available among an image mode, a video mode, and a sound mode, based on the type of the content, and output some types of content of the received content depending on the selected content output mode when one is selected from the at least one content output mode which is available.

According to an embodiment, the electronic device may further include an input module receiving a user input. The processor may be configured to display, on the display, at least one object corresponding to the at least one content output mode which is available, and select the content output mode depending on the user input received through the at least one object.

According to an embodiment, the processor may be configured to change a content output mode depending on the user input received through the at least one object and output some types of content in the received content depending on the changed content output mode.

According to an embodiment, the processor may be configured to recommend the at least one content output mode, which is available, based on at least one of the content, a position of the electronic device, a surrounding environment of the electronic device, a category of the web page, a search manner, a mode selection history of a user, or a schedule of the user, and display an object corresponding to the recommended content output mode on the display.

According to an embodiment, the processor may be configured to display, on the display, only image content of the plurality of types of content, which is included in the web page, in a second layout different from a first layout provided on the web page, when the image mode is selected.

According to an embodiment, the processor may be configured to display at least a portion of text content included in the web page together with the image content, depending on a user input.

According to an embodiment, the processor may be configured to display, on the display, only moving picture content of the plurality of types of content, which is included in the web page, in a third layout different from a first layout provided on the web page, when the video mode is selected.

According to an embodiment, the third layout may include a first region for displaying a reproduction screen of one of the moving picture content included in the web page and a second region for displaying a moving picture content list included in the web page.

According to an embodiment, the processor may be configured to output only sound content of the plurality of types of content included in the web page through the speaker when a sound mode is selected.

According to various embodiments, an electronic device may include a communication circuit which is communicable with the Internet in a wired manner or a wireless manner, a display, a user input device integrated with or separated from the display, a non-volatile storage device storing at least some software programs for web-browsing, a processor electrically connected with the communication circuit, the display, the user input device, or the non-volatile storage device, and a volatile memory electrically connected with the processor. The storage device may store instructions that, when executed, cause the processor to display a user interface of the software program on the display, to receive first hypertext markup language (html) data including a first layout and at least two types of content through the communication circuit in response to a first user input inputted through the user input device, to analyze the first html data to determine the type of content included in the first html data, to display the determined type of content on the user interface, to receive a second user input for selecting at least one type of content, and to display, on the user interface, a web page in a second layout for displaying at least one type of content, which is selected, except for the type of content, which is not selected, in response to the second user input.

According to an embodiment, the instructions may cause the processor to display at least two or more icons or buttons corresponding to the determined type of content on a portion of the user interface.

According to an embodiment, the at least two types of content may include the combination of at least two of a text, an image, a sound, or a video.

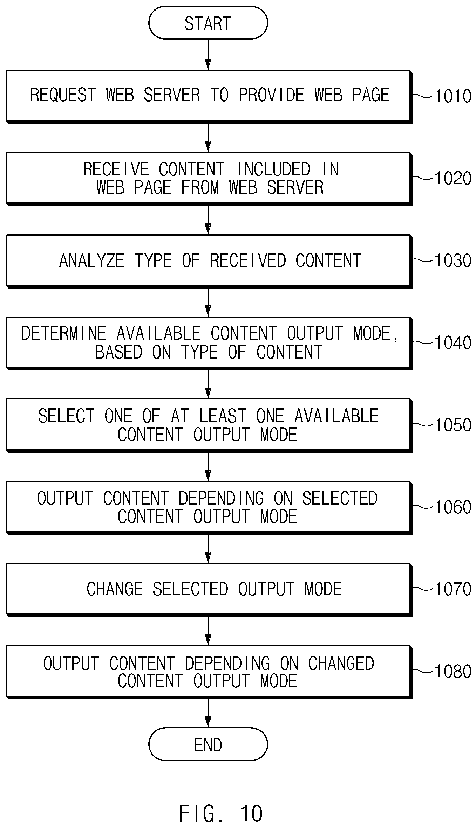

FIG. 10 is a flowchart illustrating a method of outputting content of an electronic device, according to various embodiments of the present disclosure.

The flowchart illustrated in FIG. 10 may include operations processed in the electronic device 100 illustrated in FIG. 1. Accordingly, even if the description on some parts is omitted from the following description, the description of the electronic device 100 made with reference to FIGS. 1 to 9 will be applicable to the flowchart illustrated in FIG. 10.

Referring to FIG. 10, in operation 1010, the electronic device 100 may request a web server to provide a web page. For example, the electronic device 100 may request the web server to provide the web page depending on a user input.

According to an embodiment, in operation 1020, the electronic device 100 may receive content, which is included in the web page, from the web server. According to an embodiment, the electronic device 100 may request the web server to provide a web page including a plurality of types of content and may receive the plurality of types of content from the web server.

According to an embodiment, when receiving the web page, the electronic device 100 may receive a layout of the web page together. According to an embodiment, when (while) the content is received from the web server, the electronic device 100 may output the received content in the layout (or the first layout) provided on the web page. According to an embodiment, the electronic device 100 may omit an operation of outputting the received content in the first layout when a content output mode is automatically selected without a user input.

According to an embodiment, in operation 1030, the electronic device 100 may analyze the type of content which is received (is to be received) from the web server. According to an embodiment, the electronic device 100 may classify each piece of content received from the web server as one of text content, image content, video content, and sound content.

According to an embodiment, in operation 1040, the electronic device 100 may determine a content output mode, which is available, based on the type of the content. The content output mode may include, for example, a text mode, an image mode, a video mode, or a sound mode.

According to an embodiment, in operation 1050, the electronic device 100 may select one of the available content output modes. According to an embodiment, the electronic device 100 may select the content output mode depending on the user input. According to an embodiment, the electronic device 100 may display, on the display, at least one object corresponding to at least one available content output mode and may select the content output mode depending on the user input received through the object.

According to an embodiment, the electronic device 100 may recommend at least one of the available content output modes and may display an object corresponding to the recommended content output mode on the display 130. According to an embodiment, the electronic device 100 may recommend the available content output mode based on at least one of content, a position of the electronic device, a surrounding environment of the electronic device, a category of the web page, a search manner, a mode selection history of a user, or a the schedule of the user.

According to an embodiment, the electronic device 100 may select a content output mode, based on at least one of content, a position of the electronic device, the surrounding environment of the electronic device, the category of the web page, the search manner, a mode selection history of the user, or the schedule of the user. For example, the electronic device 100 may select a content output mode appropriate to the electronic device 100 or the situation of the user without the user input.

According to an embodiment, in operation 1060, the electronic device 100 may change and output content, which is received from the web server, in the selected content output mode. According to an embodiment, the electronic device 100 may output content in a layout different from a layout provided on the web page when the content output mode is selected.

According to an embodiment, in operation 1070, the electronic device 100 may change the content output mode. According to an embodiment, the electronic device 100 may display an object corresponding to the selected output mode on the display and may change the content output mode depending on a user input received through the object. According to an embodiment, the electronic device 100 may change the content output mode based on at least one of the position, the state, and the surrounding environment of the electronic device and the schedule of a user.

According to an embodiment, in operation 1080, when the content output mode is changed, the electronic device 100 may output content in the changed content output mode.

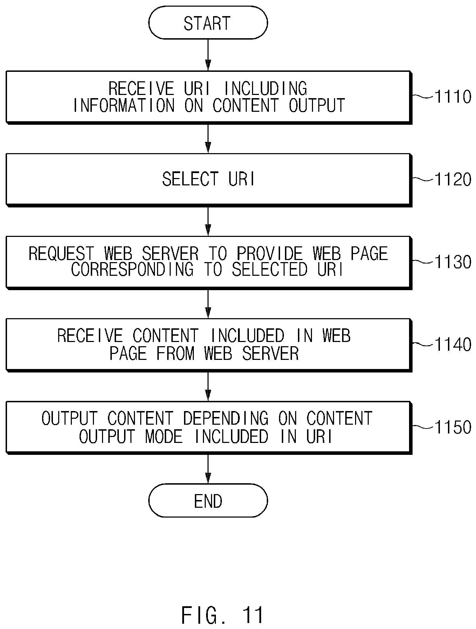

FIG. 11 is a flowchart illustrating a method of outputting content of an electronic device, according to various embodiments of the present disclosure.

The flowchart illustrated in FIG. 11 may include operations processed in the electronic device 100 illustrated in FIG. 1. Accordingly, even if the description on some parts is omitted from the following description, the description of the electronic device 100 made with reference to FIGS. 1 to 9 will be applicable to the flowchart illustrated in FIG. 11.

Referring to FIG. 11, in operation 1110, the electronic device 100 may receive a uniform resource identifier (URI) including information on content output from an external electronic device.

According to an embodiment, in operation 1120, the URI may be selected by a user. For example, the user may input a user operation of selecting the URI displayed on the display.

According to an embodiment, in operation 1130, the electronic device 100 may request a web server to provide a web page corresponding to the selected URI.

According to an embodiment, in operation 1140, the electronic device 100 may receive content, which is included in the web page, from the web server.

According to an embodiment, in operation 1150, the electronic device 100 may output the content depending on the content output mode included in the URI.

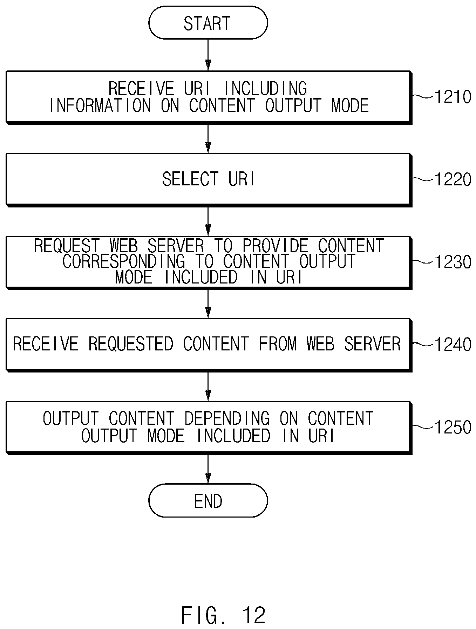

FIG. 12 is a flowchart illustrating a method of outputting content of an electronic device, according to various embodiments of the present disclosure.

The flowchart illustrated in FIG. 12 may include operations processed in the electronic device 100 illustrated in FIG. 1. Accordingly, even if the description on some parts is omitted from the following description, the description of the electronic device 100 made with reference to FIGS. 1 to 9 will be applicable to the flowchart illustrated in FIG. 12.

Referring to FIG. 12, in operation 1210, the electronic device 100 may receive a uniform resource identifier (URI) including information on a content output from an external electronic device.

According to an embodiment, in operation 1220, the URI may be selected by the user. For example, the user may input a user operation of selecting the URI displayed on the display.

According to an embodiment, in operation 1230, the electronic device 100 may request the web server to provide content corresponding to a content output mode included in the URI. For example, when information on a video mode is included in the URI, the electronic device 100 may request the web server to provide only video content in the web page.

According to an embodiment, in operation 1240, the electronic device 100 may receive the requested content from the web server.

According to an embodiment, in operation 1250, the electronic device 100 may output content depending on the content output mode included in the URI.

According to various embodiments of the present disclosure, a method of outputting content of an electronic device may include requesting a web server to provide a web page including a plurality of types of content, receiving the content included in the web page from the web server, analyzing a type of the content included in the web page, determining at least one content output mode available among an image mode, a video mode, and a sound mode, based on the type of the content, selecting one of the at least one content output mode which is available, and outputting some types of content of the received content depending on the selected content output mode.

According to an embodiment, the selecting of the content output mode may include displaying, on the display, at least one object corresponding to the at least one content output mode which is available, and selecting the content output mode depending on a user input received through the at least one object.

According to an embodiment, the method may further include changing a content output mode depending on the user input received through the at least one object and outputting some types of content in the received content depending on the changed content output mode.

According to an embodiment, the displaying of the at least one object may include recommending the at least one content output mode, which is available, based on at least one of the content, a position of the electronic device, a surrounding environment of the electronic device, a category of the web page, a search manner, a mode selection history of a user, or a schedule of the user, and displaying an object corresponding to the recommended content output mode on the display.

According to an embodiment, the outputting of the content may include displaying, on the display, only image content of the plurality of types of content, which is included in the web page, in a second layout different from a first layout provided on the web page, when the image mode is selected.

According to an embodiment, the method may further include displaying at least a portion of text content included in the web page together with the image content depending on a user input.

According to an embodiment, the outputting of the content may include displaying, on the display, only moving picture content of the plurality of types of content, which is included in the web page, in a third layout different from a first layout provided on the web page, when the video mode is selected.

According to an embodiment, the third layout may include a first region for displaying a reproduction screen of one of the moving picture content included in the web page and a second region for displaying a moving picture content list included in the web page.

According to an embodiment, the outputting of the content may include outputting only sound content of the plurality of types of content included in the web page through the speaker when a sound mode is selected.

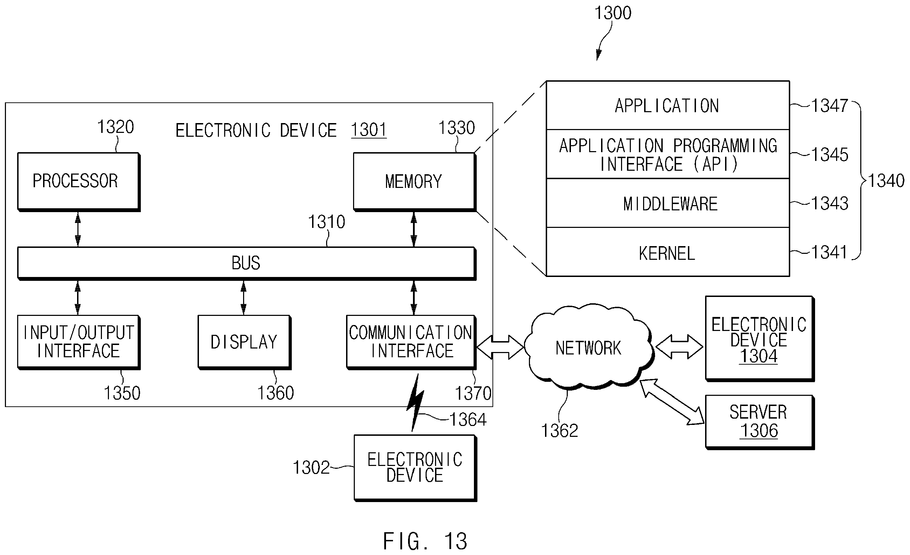

FIG. 13 is a view illustrating an electronic device in a network environment system, according to various embodiments.

Referring to FIG. 13, according to various embodiments, an electronic device 1301 in a network environment 1300 is described. For example, the electronic device 1301 may include all or a part of the electronic device 100 illustrated in FIG. 1. The electronic device 1301 may include a bus 1310, a processor 1320, a memory 1330, an input/output interface 1350, a display 1360, and a communication interface 1370. According to an embodiment, the electronic device 1301 may not include at least one of the above-described elements or may further include other element(s).

For example, the bus 1310 may interconnect the above-described elements 1310 to 1370 and may include a circuit for conveying communications (e.g., a control message and/or data) among the above-described elements.

The processor 1320 (e.g., the processor 170 of FIG. 1) may include one or more of a central processing unit (CPU), an application processor (AP), or a communication processor (CP). For example, the processor 1320 may perform an arithmetic operation or data processing associated with control and/or communication of at least other elements of the electronic device 1301.

The memory 1330 (e.g., the memory 150 of FIG. 1) may include a volatile and/or nonvolatile memory. For example, the memory 1330 may store commands or data associated with at least one other element(s) of the electronic device 1301. According to an embodiment, the memory 1330 may store software and/or a program 1340.

The program 1340 may include, for example, a kernel 1341, a middleware 1343, an application programming interface (API) 1345, and/or an application program (or "an application") 1347. At least a part of the kernel 1341, the middleware 1343, or the API 1345 may be referred to as an "operating system (OS)".

For example, the kernel 1341 may control or manage system resources (e.g., the bus 1310, the processor 1320, the memory 1330, and the like) that are used to execute operations or functions of other programs (e.g., the middleware 1343, the API 1345, and the application program 1347). Furthermore, the kernel 1341 may provide an interface that allows the middleware 1343, the API 1345, or the application program 1347 to access discrete elements of the electronic device 1301 so as to control or manage system resources.

The middleware 1343 may perform, for example, a mediation role such that the API 1345 or the application program 1347 communicates with the kernel 1341 to exchange data. Furthermore, the middleware 1343 may process task requests received from the application program 1347 according to a priority. For example, the middleware 1343 may assign the priority, which makes it possible to use a system resource (e.g., the bus 1310, the processor 1320, the memory 1330, or the like) of the electronic device 1301, to at least one of the application program 1347 and may process the one or more task requests.

The API 1345 may be, for example, an interface through which the application program 1347 controls a function provided by the kernel 1341 or the middleware 1343, and may include, for example, at least one interface or function (e.g., an instruction) for a file control, a window control, image processing, a character control, or the like.

The input/output interface 1350 (e.g., the input module 120 of FIG. 1) may play a role, for example, of an interface which transmits a command or data input from a user or another external device, to other element(s) of the electronic device 1301. Furthermore, the input/output interface 1350 may output a command or data, received from other element(s) of the electronic device 1301, to a user or another external device.

The display 1360 (e.g., the display 130 of FIG. 1) may include, for example, a liquid crystal display (LCD), a light-emitting diode (LED) display, an organic LED (OLED) display, a microelectromechanical systems (MEMS) display, or an electronic paper display. The display 1360 may display, for example, various contents (e.g., a text, an image, a video, an icon, a symbol, and the like) to a user. The display 1360 may include a touch screen and may receive, for example, a touch, gesture, proximity, or hovering input using an electronic pen or a part of a user's body.

For example, the communication interface 1370 (e.g., the communication module 110 of FIG. 1) may establish communication between the electronic device 1301 and an external device (e.g., the first external electronic device 1302, the second external electronic device 1304, or the server 1306 (e.g., a web server)). For example, the communication interface 1370 may be connected to the network 1362 over wireless communication or wired communication to communicate with the external device (e.g., the second external electronic device 1304 or the server 1306).

The wireless communication may use at least one of, for example, long-term evolution (LTE), LTE Advanced (LTE-A), Code Division Multiple Access (CDMA), Wideband CDMA (WCDMA), Universal Mobile Telecommunications System (UMTS), Wireless Broadband (WiBro), Global System for Mobile Communications (GSM), or the like, as cellular communication protocol. Furthermore, the wireless communication may include, for example, the short range communication 1364. The short range communication 1364 may include at least one of wireless fidelity (WiFi), Bluetooth, Bluetooth low energy, Zigbee, near field communication (NFC), magnetic secure transmission (MST), a global navigation satellite system (GNSS), or the like. The GNSS may include at least one of, for example, a global positioning system (GPS), a global navigation satellite system (Glonass), a Beidou navigation satellite system (hereinafter referred to as "Beidou"), or an European global satellite-based navigation system (hereinafter referred to as "Galileo") based on an available region, a bandwidth, or the like. Hereinafter, in this disclosure, "GPS" and "GNSS" may be interchangeably used.

The wired communication may include at least one of, for example, a universal serial bus (USB), a high definition multimedia interface (HDMI), a recommended standard-232 (RS-232), power-line communication, a plain old telephone service (POTS), or the like. The network 1362 may include at least one of telecommunications networks, for example, a computer network (e.g., LAN or WAN), an Internet, or a telephone network.

Each of the first and second external electronic devices 1302 and 1304 may be a device of which the type is different from or the same as that of the electronic device 1301. According to an embodiment, the server 1306 may include a group of one or more servers. According to various embodiments, all or a portion of operations that the electronic device 1301 will perform may be executed by another or plural electronic devices (e.g., the electronic device 1302 or 1304 or the server 1306). According to an embodiment, in the case where the electronic device 1301 executes any function or service automatically or in response to a request, the electronic device 1301 may not perform the function or the service internally, but, alternatively additionally, it may request at least a portion of a function associated with the electronic device 1301 from another device (e.g., the electronic device 1302 or 1304 or the server 1306). The other electronic device may execute the requested function or additional function and may transmit the execution result to the electronic device 1301. The electronic device 1301 may provide the requested function or service using the received result or may additionally process the received result to provide the requested function or service. To this end, for example, cloud computing, distributed computing, or client-server computing may be used.

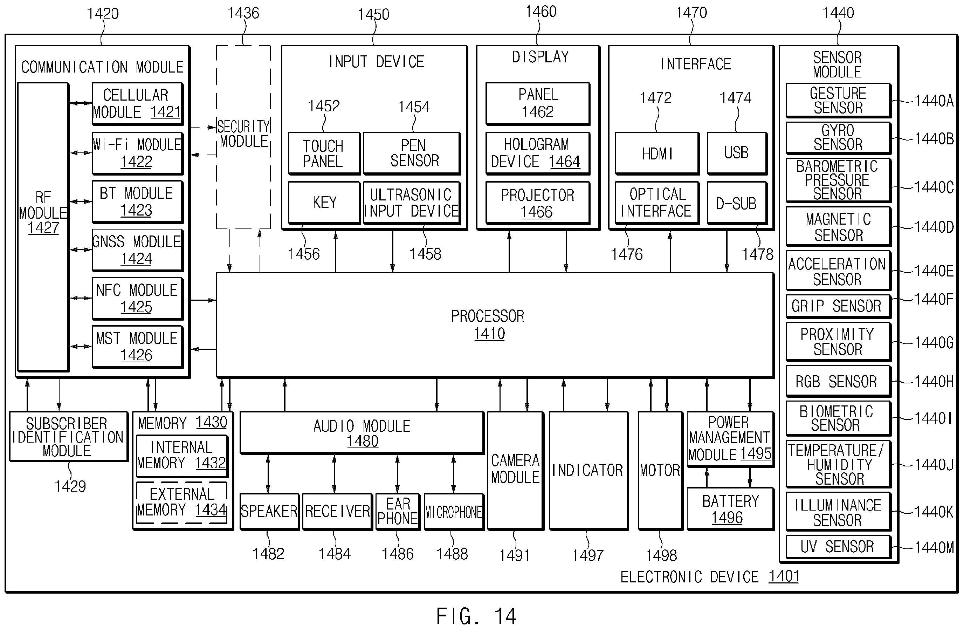

FIG. 14 illustrates a block diagram of an electronic device, according to various embodiments.

An electronic device 1401 may include, for example, all or a part of the electronic device 100 illustrated in FIG. 1. The electronic device 1401 may include one or more processors (e.g., an application processor (AP)) 1410, a communication module 1420, a subscriber identification module 1429, a memory 1430, a sensor module 1440, an input device 1450, a display 1460, an interface 1470, an audio module 1480, a camera module 1491, a power management module 1495, a battery 1496, an indicator 1497, and a motor 1498.

The processor 1410 may drive, for example, an operating system (OS) or an application to control a plurality of hardware or software elements connected to the processor 1410 and may process and compute a variety of data. For example, the processor 1410 may be implemented with a System on Chip (SoC). According to an embodiment, the processor 1410 may further include a graphic processing unit (GPU) and/or an image signal processor. The processor 1410 may include at least a part (e.g., a cellular module 1421) of elements illustrated in FIG. 14. The processor 1410 may load a command or data, which is received from at least one of other elements (e.g., a nonvolatile memory), into a volatile memory and process the loaded command or data. The processor 1410 may store a variety of data in the nonvolatile memory.

The communication module 1420 may be configured the same as or similar to the communication interface 1370 of FIG. 13. The communication module 1420 may include the cellular module 1421, a WiFi module 1422, a Bluetooth (BT) module 1423, a GNSS module 1424 (e.g., a GPS module, a Glonass module, a Beidou module, or a Galileo module), a near field communication (NFC) module 1425, a MST module 1426 and a radio frequency (RF) module 1427.

The cellular module 1421 may provide, for example, voice communication, video communication, a character service, an Internet service, or the like over a communication network. According to an embodiment, the cellular module 1421 may perform discrimination and authentication of the electronic device 1401 within a communication network by using the subscriber identification module (e.g., a SIM card) 1429. According to an embodiment, the cellular module 1421 may perform at least a portion of functions that the processor 1410 provides. According to an embodiment, the cellular module 1421 may include a communication processor (CP).

Each of the WiFi module 1422, the BT module 1423, the GNSS module 1424, the NFC module 1425, or the MST module 1426 may include a processor for processing data exchanged through a corresponding module, for example. According to an embodiment, at least a part (e.g., two or more) of the cellular module 1421, the WiFi module 1422, the BT module 1423, the GNSS module 1424, the NFC module 1425, or the MST module 1426 may be included within one Integrated Circuit (IC) or an IC package.

For example, the RF module 1427 may transmit and receive a communication signal (e.g., an RF signal). For example, the RF module 1427 may include a transceiver, a power amplifier module (PAM), a frequency filter, a low noise amplifier (LNA), an antenna, or the like. According to another embodiment, at least one of the cellular module 1421, the WiFi module 1422, the BT module 1423, the GNSS module 1424, the NFC module 1425, or the MST module 1426 may transmit and receive an RF signal through a separate RF module.

The subscriber identification module 1429 may include, for example, a card and/or embedded SIM that includes a subscriber identification module and may include unique identify information (e.g., integrated circuit card identifier (ICCID)) or subscriber information (e.g., integrated mobile subscriber identity (IMSI)).

The memory 1430 (e.g., the memory 1330) may include an internal memory 1432 or an external memory 1434. For example, the internal memory 1432 may include at least one of a volatile memory (e.g., a dynamic random access memory (DRAM), a static RAM (SRAM), a synchronous DRAM (SDRAM), or the like), a nonvolatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a flash memory (e.g., a NAND flash memory or a NOR flash memory), or the like), a hard drive, or a solid state drive (SSD).

The external memory 1434 may further include a flash drive such as compact flash (CF), secure digital (SD), micro secure digital (Micro-SD), mini secure digital (Mini-SD), extreme digital (xD), a multimedia card (MMC), a memory stick, or the like. The external memory 1434 may be operatively and/or physically connected to the electronic device 1401 through various interfaces.

A security module 1436 (or a secure memory) may be a module that includes a storage space of which a security level is higher than that of the memory 1430 and may be a circuit that guarantees safe data storage and a protected execution environment. The security module 1436 may be implemented with a separate circuit and may include a separate processor. For example, the security module 1436 may be in a smart chip or a secure digital (SD) card, which is removable, or may include an embedded secure element (eSE) embedded in a fixed chip of the electronic device 1401. Furthermore, the security module 1436 may operate based on an operating system (OS) that is different from the OS of the electronic device 1401. For example, the security module 1436 may operate based on java card open platform (JCOP) OS. The sensor module 1440 may measure, for example, a physical quantity or may detect an operation state of the electronic device 1401. The sensor module 1440 may convert the measured or detected information to an electric signal. For example, the sensor module 1440 may include at least one of a gesture sensor 1440A, a gyro sensor 1440B, a barometric pressure sensor 1440C, a magnetic sensor 1440D, an acceleration sensor 1440E, a grip sensor 1440F, the proximity sensor 1440G, a color sensor 1440H (e.g., red, green, blue (RGB) sensor), a biometric sensor 1440I, a temperature/humidity sensor 1440J, an illuminance sensor 1440K, or an UV sensor 1440M. Although not illustrated, additionally or alternatively, the sensor module 1440 may further include, for example, an E-nose sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 1440 may further include a control circuit for controlling at least one or more sensors included therein. According to an embodiment, the electronic device 1401 may further include a processor that is a part of the processor 1410 or independent of the processor 1410 and is configured to control the sensor module 1440. The processor may control the sensor module 1440 while the processor 1410 remains at a sleep state.

The input device 1450 may include, for example, a touch panel 1452, a (digital) pen sensor 1454, a key 1456, or an ultrasonic input unit 1458. For example, the touch panel 1452 may use at least one of capacitive, resistive, infrared and ultrasonic detecting methods. Also, the touch panel 1452 may further include a control circuit. The touch panel 1452 may further include a tactile layer to provide a tactile reaction to a user.

The (digital) pen sensor 1454 may be, for example, a part of a touch panel or may include an additional sheet for recognition. The key 1456 may include, for example, a physical button, an optical key, a keypad, or the like. The ultrasonic input device 1458 may detect (or sense) an ultrasonic signal, which is generated from an input device, through a microphone (e.g., a microphone 1488) and may check data corresponding to the detected ultrasonic signal.

The display 1460 may include a panel 1462, a hologram device 1464, or a projector 1466. The panel 1462 may be implemented, for example, to be flexible, transparent or wearable. The panel 1462 and the touch panel 1452 may be integrated into a single module. The hologram device 1464 may display a stereoscopic image in a space using a light interference phenomenon. The projector 1466 may project light onto a screen so as to display an image. For example, the screen may be arranged in the inside or the outside of the electronic device 1401. According to an embodiment, the display 1460 may further include a control circuit for controlling the panel 1462, the hologram device 1464, or the projector 1466.

The interface 1470 may include, for example, a high-definition multimedia interface (HDMI) 1472, a universal serial bus (USB) 1474, an optical interface 1476, or a D-subminiature (D-sub) 1478. The interface 1470 may be included, for example, in the communication interface 1370 illustrated in FIG. 13. Additionally or alternatively, the interface 1470 may include, for example, a mobile high definition link (MHL) interface, a SD card/multi-media card (MMC) interface, or an infrared data association (IrDA) standard interface.

The audio module 1480 may convert a sound and an electric signal in dual directions. At least a part of the audio module 1480 or the audio module 1480 may process, for example, sound information that is input or output through a speaker 1482, a receiver 1484, an earphone 1486, or the microphone 1488.

For example, the camera module 1491 may shoot a still image or a video. According to an embodiment, the camera module 1491 may include at least one or more image sensors (e.g., a front sensor or a rear sensor), a lens, an image signal processor (ISP), or a flash (e.g., an LED or a xenon lamp).

The power management module 1495 may manage, for example, power of the electronic device 1401. According to an embodiment, a power management integrated circuit (PMIC), a charger IC, or a battery or fuel gauge may be included in the power management module 1495. The PMIC may have a wired charging method and/or a wireless charging method. The wireless charging method may include, for example, a magnetic resonance method, a magnetic induction method or an electromagnetic method and may further include an additional circuit, for example, a coil loop, a resonant circuit, or a rectifier, and the like. The battery gauge may measure, for example, a remaining capacity of the battery 1496 and a voltage, current or temperature thereof while the battery is charged. The battery 1496 may include, for example, a rechargeable battery and/or a solar battery.

The indicator 1497 may display a specific state of the electronic device 1401 or a part thereof (e.g., the processor 1410), such as a booting state, a message state, a charging state, and the like. The motor 1498 may convert an electrical signal into a mechanical vibration and may generate the following effects: vibration, haptic, and the like. Although not illustrated, a processing device (e.g., a GPU) for supporting a mobile TV may be included in the electronic device 1401. The processing device for supporting the mobile TV may process media data according to the standards of digital multimedia broadcasting (DMB), digital video broadcasting (DVB), MediaFlo™, or the like.

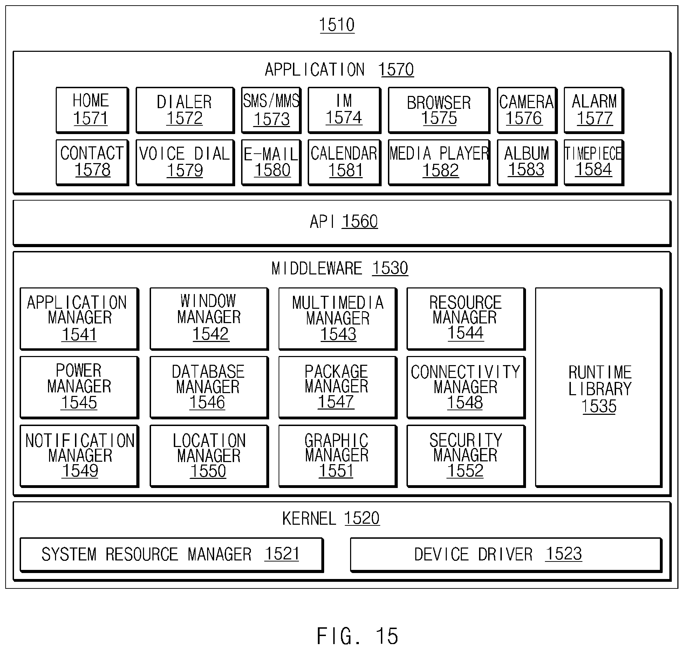

FIG. 15 illustrates a block diagram of a program module, according to various embodiments.

According to an embodiment, a program module 1510 (e.g., the program 1340) may include an operating system (OS) to control resources associated with an electronic device (e.g., the electronic device 1301), and/or diverse applications (e.g., the application program 1347) driven on the OS. The OS may be, for example, Android™, iOS™, Windows™, Symbian™, Tizen™, or Bada™.

The program module 1510 may include a kernel 1520, a middleware 1530, an application programming interface (API) 1560, and/or an application 1570. At least a portion of the program module 1510 may be preloaded on an electronic device or may be downloadable from an external electronic device (e.g., the first electronic device 1302, the second electronic device 1304, the server 1306, or the like).

The kernel 1520 (e.g., the kernel 1341) may include, for example, a system resource manager 1521 or a device driver 1523. The system resource manager 1521 may perform control, allocation, or retrieval of system resources. According to an embodiment, the system resource manager 1521 may include a process managing unit, a memory managing unit, or a file system managing unit. The device driver 1523 may include, for example, a display driver, a camera driver, a Bluetooth driver, a shared memory driver, a USB driver, a keypad driver, a WiFi driver, an audio driver, or an inter-process communication (IPC) driver.

The middleware 1530 may provide, for example, a function that the application 1570 needs in common, or may provide diverse functions to the application 1570 through the API 1560 to allow the application 1570 to efficiently use limited system resources of the electronic device. According to an embodiment, the middleware 1530 (e.g., the middleware 1343) may include at least one of a runtime library 1535, an application manager 1541, a window manager 1542, a multimedia manager 1543, a resource manager 1544, a power manager 1545, a database manager 1546, a package manager 1547, a connectivity manager 1548, a notification manager 1549, a location manager 1550, a graphic manager 1551, a security manager 1552, or an input manager 1554.

The runtime library 1535 may include, for example, a library module that is used by a compiler to add a new function through a programming language while the application 1570 is being executed. The runtime library 1535 may perform input/output management, memory management, or capacities about arithmetic functions.

The application manager 1541 may manage, for example, a life cycle of at least one application of the application 1570. The window manager 1542 may manage a graphic user interface (GUI) resource that is used in a screen. The multimedia manager 1543 may identify a format necessary for playing diverse media files, and may perform encoding or decoding of media files by using a codec suitable for the format. The resource manager 1544 may manage resources such as a storage space, memory, or source code of at least one application of the application 1570.

The power manager 1545 may operate, for example, with a basic input/output system (BIOS) to manage a battery or power, and may provide power information for an operation of an electronic device. The database manager 1546 may generate, search for, or modify database that is to be used in at least one application of the application 1570. The package manager 1547 may install or update an application that is distributed in the form of package file.

The connectivity manager 1548 may manage, for example, wireless connection such as WiFi or Bluetooth. The notification manager 1549 may display or notify an event such as arrival message, appointment, or proximity notification in a mode that does not disturb a user. The location manager 1550 may manage location information about an electronic device. The graphic manager 1551 may manage a graphic effect that is provided to a user, or manage a user interface relevant thereto. The security manager 1552 may provide a general security function necessary for system security, user authentication, or the like. According to an embodiment, in the case where an electronic device (e.g., the electronic device 1301) includes a telephony function, the middleware 1530 may further include a telephony manager for managing a voice or video call function of the electronic device.

The middleware 1530 may include a middleware module that combines diverse functions of the above-described elements. The middleware 1530 may provide a module specialized to each OS kind to provide differentiated functions. Additionally, the middleware 1530 may dynamically remove a part of the preexisting elements or may add new elements thereto.

The API 1560 (e.g., the API 1345) may be, for example, a set of programming functions and may be provided with a configuration that is variable depending on an OS. For example, in the case where an OS is Android™ or iOS™, it may provide one API set per platform. In the case where an OS is Tizen™, it may provide two or more API sets per platform.

The application 1570 (e.g., the application program 1347) may include, for example, one or more applications capable of providing functions for a home 1571, a dialer 1572, an SMS/MMS 1573, an instant message (IM) 1574, a browser 1575, a camera 1576, an alarm 1577, a contact 1578, a voice dial 1579, an e-mail 1580, a calendar 1581, a media player 1582, an album 1583, a timepiece 1584, and a payment 1585 or for offering health care (e.g., measuring an exercise quantity, blood sugar, or the like) or environment information (e.g., information of barometric pressure, humidity, temperature, or the like).

According to an embodiment, the application 1570 may include an application (hereinafter referred to as "information exchanging application" for descriptive convenience) to support information exchange between an electronic device (e.g., the electronic device 1301) and an external electronic device (e.g., the electronic device 1302 or 1304). The information exchanging application may include, for example, a notification relay application for transmitting specific information to an external electronic device, or a device management application for managing the external electronic device.

For example, the notification relay application may include a function of transmitting notification information, which arise from other applications (e.g., applications for SMS/MMS, e-mail, health care, or environmental information), to an external electronic device (e.g., the electronic device 1302 or 1304). Additionally, the information exchanging application may receive, for example, notification information from an external electronic device and provide the notification information to a user.

The device management application may manage (e.g., install, delete, or update), for example, at least one function (e.g., turn-on/turn-off of an external electronic device itself (or a part of elements) or adjustment of brightness (or resolution) of a display) of the external electronic device (e.g., the electronic device 1302 or 1304) which communicates with the electronic device, an application running in the external electronic device, or a service (e.g., a call service, a message service, or the like) provided from the external electronic device.

According to an embodiment, the application 1570 may include an application (e.g., a health care application of a mobile medical device) that is assigned in accordance with an attribute of an external electronic device (e.g., the electronic device 1302 or 1304). According to an embodiment, the application 1570 may include an application that is received from an external electronic device (e.g., the electronic device 1302 or 1304, or the server 1306). According to an embodiment, the application 1570 may include a preloaded application or a third party application that is downloadable from a server. The names of elements of the program module 1510 according to the embodiment may be modifiable depending on kinds of operating systems.

According to various embodiments, at least a portion of the program module 1510 may be implemented by software, firmware, hardware, or a combination of two or more thereof. At least a portion of the program module 1510 may be implemented (e.g., executed), for example, by the processor (e.g., the processor 170 of FIG. 1). At least a portion of the program module 1510 may include, for example, modules, programs, routines, sets of instructions, processes, or the like for performing one or more functions.

The term "module" used in this disclosure may represent, for example, a unit including one or more combinations of hardware, software and firmware. The term "module" may be interchangeably used with the terms "unit", "logic", "logical block", "component" and "circuit". The "module" may be a minimum unit of an integrated component or may be a part thereof. The "module" may be a minimum unit for performing one or more functions or a part thereof. The "module" may be implemented mechanically or electronically. For example, the "module" may include at least one of an application-specific IC (ASIC) chip, a field-programmable gate array (FPGA), and a programmable-logic device for performing some operations, which are known or will be developed.

At least a part of an apparatus (e.g., modules or functions thereof) or a method (e.g., operations) according to various embodiments may be, for example, implemented by instructions stored in a computer-readable storage media in the form of a program module. The instruction, when executed by a processor (e.g., the processor 170 of FIG. 1), may cause the one or more processors to perform a function corresponding to the instruction. The computer-readable storage media, for example, may be the memory (e.g., the memory 150 of FIG. 1).

A computer-readable recording medium may include a hard disk, a floppy disk, a magnetic media (e.g., a magnetic tape), an optical media (e.g., a compact disc read only memory (CD-ROM) and a digital versatile disc (DVD), a magneto-optical media (e.g., a floptical disk)), and hardware devices (e.g., a read only memory (ROM), a random access memory (RAM), or a flash memory). Also, the one or more instructions may contain a code made by a compiler or a code executable by an interpreter. The above hardware unit may be configured to operate via one or more software modules for performing an operation according to various embodiments, and vice versa.

A module or a program module according to various embodiments may include at least one of the above elements, or a part of the above elements may be omitted, or additional other elements may be further included. Operations performed by a module, a program module, or other elements according to various embodiments may be executed sequentially, in parallel, repeatedly, or in a heuristic method. In addition, some operations may be executed in different sequences or may be omitted. Alternatively, other operations may be added. While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device comprising:
a communication module;
a display;
a speaker; and
a processor configured to:
request a web page from a web server including a plurality of types of content through the communication module;
receive the content included in the web page from the web server; analyze a type of the content included in the web page;
determine at least one content output mode available among an image mode, a video mode, and a sound mode, based on the type of the content; and
output, when one of the at least one content output mode, which is available, is selected, some types of content in the received content depending on the selected content output mode.

2. The electronic device of claim 1, further comprising:
an input module configured to receive a user input,
wherein the processor is configured to:
display, on the display, at least one object corresponding to the at least one content output mode which is available; and
select the content output mode depending on a user input received through the at least one object.

3. The electronic device of claim 2, wherein the processor is configured to:
change a content output mode depending on the user input received through the at least one object; and
output some types of content in the received content depending on the changed content output mode.

4. The electronic device of claim 2, wherein the processor is configured to:
recommend the at least one content output mode, which is available, based on at least one of the content, a position of the electronic device, a surrounding environment of the electronic device, a category of a web page, a search manner, a mode selection history of a user, or a schedule of the user; and
display an object corresponding to the recommended content output mode on the display.

5. The electronic device of claim 1, wherein the processor is configured to:
display, on the display, only image content of the plurality of types of content, which is included in the web page, in a second layout different from a first layout provided on the web page, when the image mode is selected.

6. The electronic device of claim 5, wherein the processor is configured to:
display at least a portion of text content included in the web page together with the image content, depending on a user input.

7. The electronic device of claim 1, wherein the processor is configured to:
display, on the display, only moving picture content of the plurality of types of content, which is included in the web page, in a third layout different from a first layout provided on the web page, when the video mode is selected.

8. The electronic device of claim 7, wherein the third layout includes:
a first region for displaying a reproduction screen of one of the moving picture content included in the web page and a second region for displaying a moving picture content list included in the web page.

9. The electronic device of claim 1, wherein the processor is configured to:
output only sound content of the plurality of types of content included in the web page through the speaker when the sound mode is selected.

10. A method of outputting content of an electronic device, the method comprising:
requesting a web server to provide a web page including a plurality of types of content;
receiving the content included in the web page from the web server;
analyzing a type of the content included in the web page;
determining at least one content output mode, which is available, among an image mode, a video mode, and a sound mode, based on the type of the content;
selecting one of the at least one content output mode which is available; and
outputting some types of content in the received content depending on the selected content output mode.

11. The method of claim 10, wherein the selecting one of the content output mode includes:
displaying, on a display, at least one object corresponding to the at least one content output mode which is available; and
selecting the content output mode depending on a user input received through the at least one object.

12. The method of claim 11, further comprising:
changing a content output mode depending on the user input received through the at least one object; and
outputting some types of content in the received content depending on the changed content output mode.

13. The method of claim 11, wherein the displaying of the at least one object includes:
recommending the at least one content output mode, which is available, based on at least one of the content, a position of the electronic device, a surrounding environment of the electronic device, a category of the web page, a search manner, a mode selection history of the user, or a schedule of the user; and
displaying, on the display, an object corresponding to the recommended content output mode.

14. The method of claim 10, wherein the outputting of the some types of content of the received content includes:
displaying, on a display, only image content of the plurality of types of content, which is included in the web page, in a second layout different from a first layout provided on the web page, when the image mode is selected.

15. The method of claim 14, further comprising:
displaying at least a portion of text content included in the web page together with the image content depending on a user input.
